# FASCICULE DE BREVET EUROPEEN

(11) **EP 1 921 723 B1**
(45) Date de publication et mention de la délivrance du brevet: **17.11.2010**
(21) Numéro de dépôt: 07354050.2
(22) Date de dépôt: 25.09.2007
(51) Int. Cl.: H02G 5/00, H02G 5/06

(54) **Dispositif de raccordement électrique de deux parties d'une canalisation électrique préfabriquée pour réaliser le réglage en longueur de ladite canalisation**
Elektrisches Anschlusssystem zwischen zwei Teilen einer vorgefertigten elektrischen Leitung zur Umsetzung der Längenregulierung dieser Leitung
Device for electrically connecting two parts of a prefabricated wiring system in order to adjust the length of said wiring system

(30) Priorité: 07.11.2006 FR 0609712
(43) Date de publication de la demande: 14.05.2008
(73) Titulaire: Schneider Electric Industries SAS, 92500 Rueil-Malmaison (FR)
(72) Inventeur: Rodriquez, Alejandro, 38050 Grenoble Cedex 09 (FR)
(74) Mandataire: Tripodi, Paul

(56) Documents cités:
- US-A- 2 992 291
- US-A- 3 462 541
- US-A- 5 821 464

## Description

La présente invention concerne un dispositif de raccordement électrique de deux parties d'une canalisation électrique préfabriquée pour réaliser le réglage en longueur de ladite canalisation, ladite canalisation comprenant plusieurs barres conductrices s'étendant sensiblement parallèlement les unes par rapport aux autres.

Lors de l'installation d'une canalisation électrique préfabriquée, il arrive qu'un morceau de canalisation de longueur non standard et indéterminée manque, ce qui rend nécessaire l'utilisation d'éléments de raccordement de longueur non standard à intégrer dans la canalisation de manière à obtenir la longueur souhaitée de canalisation.
Il est alors nécessaire pour le client de passer une commande d'un élément spécial en fin de chantier pour terminer l'installation. Cet élément doit être fabriqué à une longueur spécifique et il est nécessaire d'attendre la livraison pour finir la connexion de sa ligne.

On connaît le document US-5-821464 décrivant un dispositif comportant les caractéristiques du préambule de la revendication principale.

La présente invention propose un dispositif de raccordement pour une canalisation électrique préfabriquée pour réaliser le réglage en longueur de ladite canalisation, de conception simple et d'encombrement réduit, qui peut être installé sur une canalisation déjà posée, permettant à ladite canalisation d'être mise à longueur rapidement et simplement sur le chantier et dont le réglage est facilité.

A cet effet, la présente invention a pour objet un dispositif de raccordement électrique selon la revendication 1.

Selon une caractéristique particulière, chaque ensemble de barres est monté dans une enveloppe à laquelle il est fixé, les dimensions des enveloppes étant telles que l'une de enveloppes puisse coulisser par rapport à l'autre enveloppe lors du déplacement relatif des deux ensembles de portions de barres, grâce à des moyens de coulissement et de centrage prévus en partie sur l'une des enveloppes et/ou en partie sur l'autre enveloppe.

Selon une autre caractéristique, ce dispositif comporte des moyens de réglage de la position relative des deux enveloppes, lesdits moyens comportant deux galets dits seconds comportant respectivement deux axes sensiblement perpendiculaires l'un par rapport à l'autre.

Selon une autre caractéristique, l'une ou les enveloppes comporte(nt) des rails télescopiques destinés à assurer le guidage et le centrage des barres.

Selon une autre caractéristique, ce dispositif comporte des blocs isolants placés entre deux barres en regard non destinées à être reliées électriquement.

Selon une autre caractéristique, ce dispositif comporte au moins un dispositif de bridage des portions de barres mobiles et/ou au moins un dispositif de bridage des portions de barres fixes.

Selon une autre caractéristique, la zone de contact entre les portions de barres est constante quelque soit la distance de recouvrement entre les portions de barres des deux ensembles précités et donc la position de réglage choisie.

Selon une autre caractéristique, le(s) dispositif(s) de bridage fixe(s) des portions de barres fixes comporte(nt) des tiges isolées coopérant avec les lumières précitées.

Mais d'autres avantages et caractéristiques techniques de l'invention apparaîtront mieux dans la description détaillée qui suit et se réfère aux dessins annexés donnés uniquement à titre d'exemple et dans lesquels :
- La figure 1 est une vue en perspective d'un dispositif de raccordement selon l'invention,
- La figure 2 est une vue similaire à la précédente, le capot d'accès aux vis de réglage ayant été enlevé,
- La figure 3 est une vue en perspective et comportant un arraché, illustrant la partie intérieure du dispositif,
- La figure 4 est une vue de détail A de la figure précédente, et
- La figure 5 est une vue en perspective des deux enveloppes du dispositif selon l'invention.

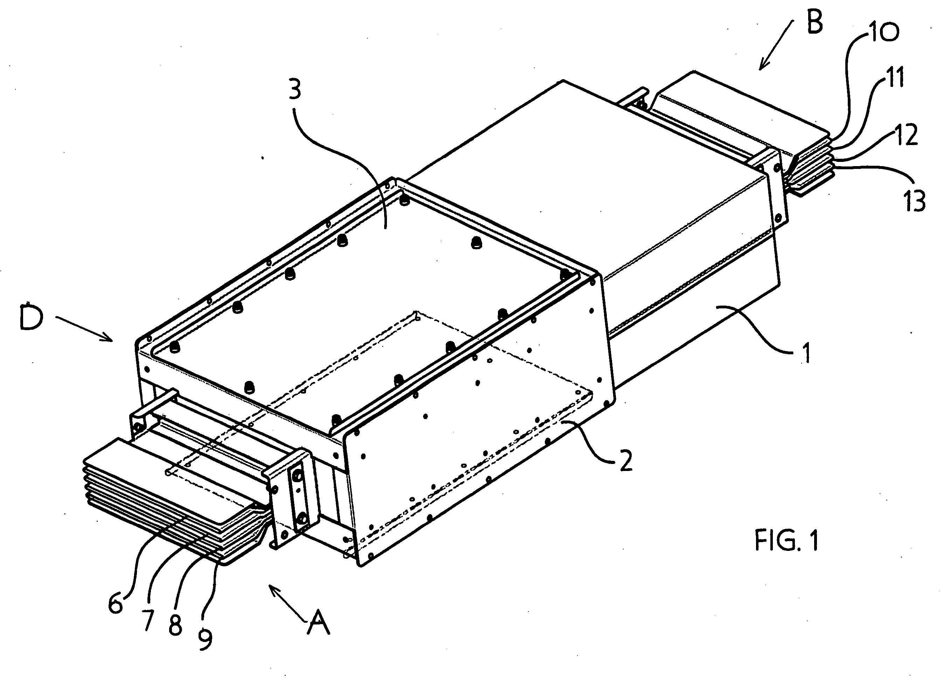

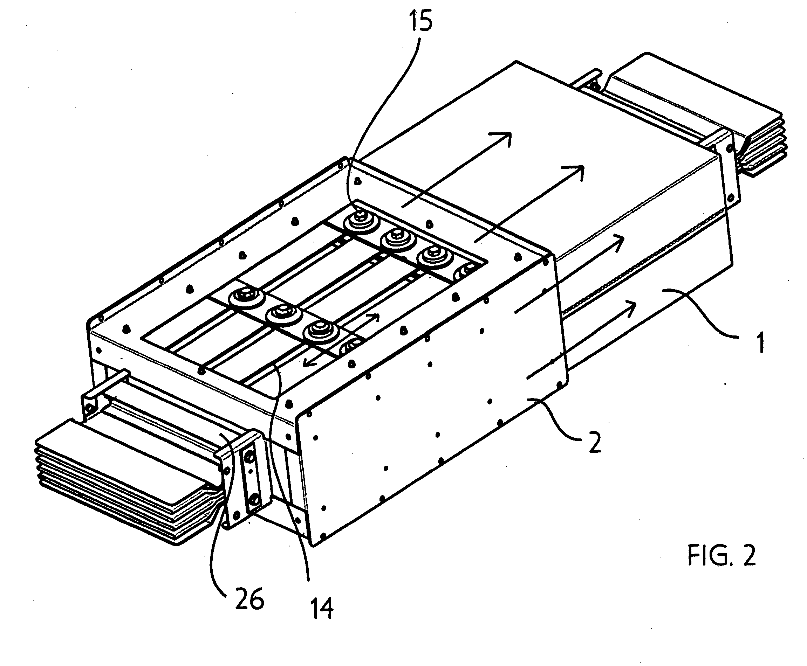

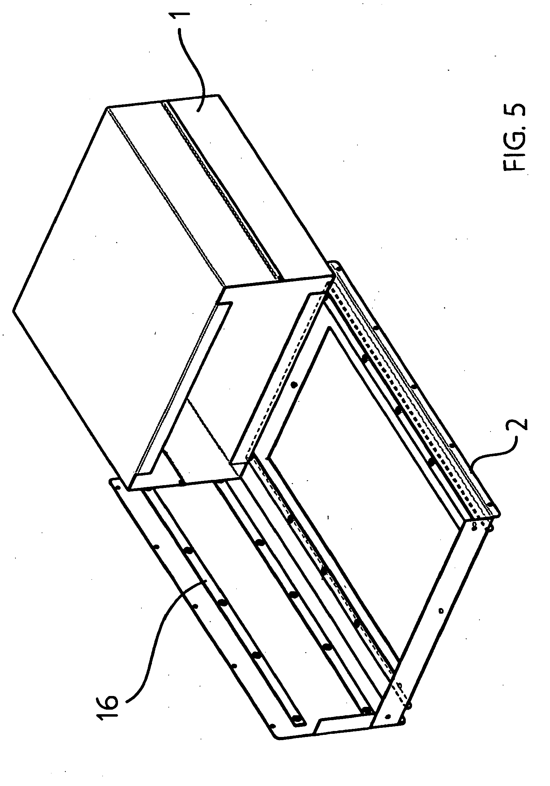

Sur les figures 1 à 3, on voit un dispositif de raccordement D selon l'invention destiné à être intégré dans une canalisation électrique préfabriquée pour régler la longueur définitive de la canalisation. Ce dispositif est logé dans deux enveloppes 1,2 comprenant une partie fixe 1 et une partie mobile 2 par rapport à ladite partie fixe, la partie mobile 2 comportant un capot 3 amovible d'accès à des vis de réglage 15 (fig.2). Ce dispositif comporte un premier ensemble A de quatre portions de barres 6,7,8,9 dites mobiles, logées dans l'enveloppe mobile 2 et un second ensemble B de portions de barres 10,11,12,13 dites fixes, logées dans la partie fixe 1 de l'enveloppe. Les portions de barres mobiles 6 à 9 comportent des lumières de réglage 14 coopérant avec des tiges 15,28 fixés dans l'enveloppe fixe 1 et s'étendant perpendiculairement auxdites barres 6 à 13, de manière à assurer le guidage en coulissement des barres mobiles 6 à 9 par rapport aux barres fixes 10 à 13 suivant les flèches de la figure 2. L'enveloppe mobile 2 présente une hauteur et une largeur supérieure à celles de l'enveloppe fixe 1 de manière à pouvoir coulisser le long des surfaces délimitant l'enveloppe fixe. A cet effet, des moyens de coulissement et de centrage 16 tels qu'illustrés sur la figure 5, sont prévus sur l'enveloppe mobile 2.

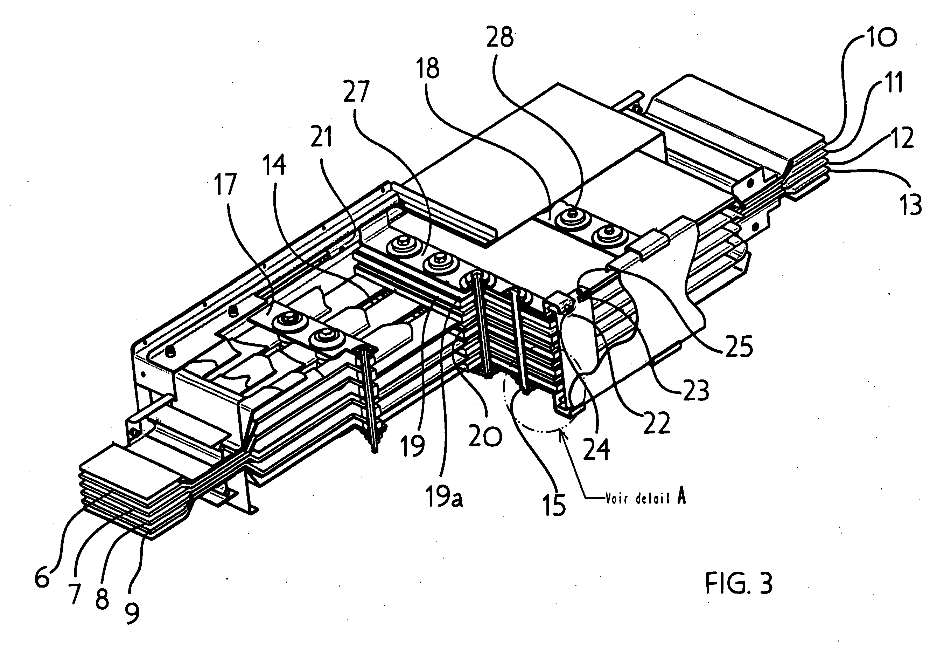

En se reportant à la figure 3, on peut observer qu'à l'intérieur de l'enveloppe mobile 2 se trouve un dispositif 17 de bridage des portions de barres mobiles 6 à 9, destiné à assurer la tenue mécanique des portions de barres mobiles. De même, à l'intérieur de la partie fixe 1 se trouve un dispositif de bridage 18 des portions de barres dites fixes 10 à 13 comportant des tiges 28, destiné à assurer la tenue mécanique des portions de barres fixes 10 à 13, et un dispositif de bridage 27 comportant des tiges 15, lesdites tiges 15 et 28 assurant le guidage des barres mobiles 6 à 9. Le dispositif de bridage 27 sert également à maintenir le dispositif de raccordement à la longueur souhaitée.

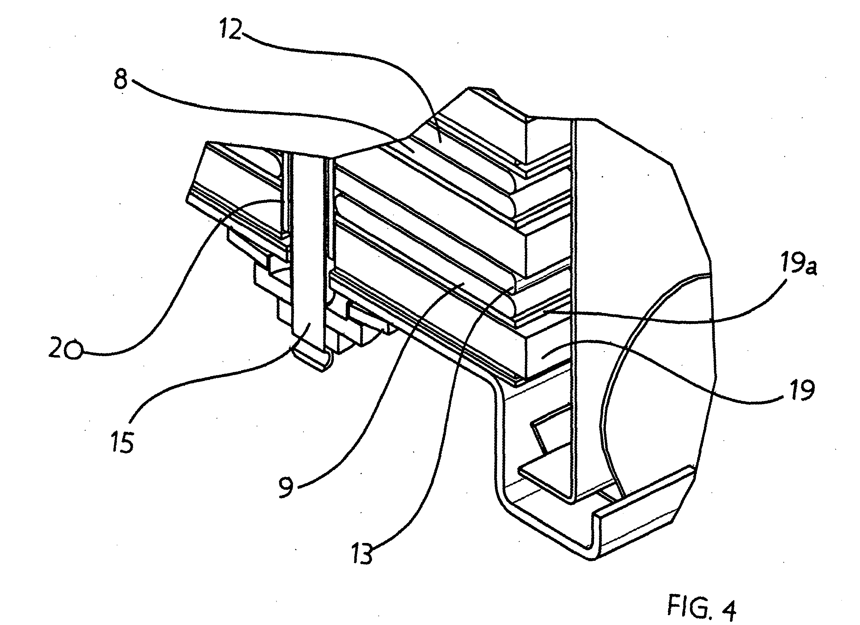

Tel qu'illustré sur les figures 3 et 4, des blocs isolants 19 et des feuilles isolantes 19a sont interposés entre les portions de barre au niveau de la jonction 27 entre les portions de barres. Les feuilles isolantes comportent également des lumières pour permettre leur déplacement en même temps que les portions de barres mobiles 6 à 9 par rapport aux portions de barres fixes 10 à 13. Des premiers galets 20 sont placés autour des tiges 15 au niveau de la jonction électrique des portions de barres 6,7,8,9 et 10,11,12,13 et sont destinés à faciliter le glissement relatif des portions de barres, ces portions de barres étant guidées en translation grâce à la présence de rails télescopiques 21 prévus sur les enveloppes 1 et 2 et grâce aux lumières précitées 14 qui glissent sur les tiges isolées 15,28 qui traversent les dispositifs de bridage 27 et 18.
Ces dispositifs de bridage fixe 18 et 27 et le dispositif de bridage mobile 17 permettent de garantir la performance en court-circuit quelque soit la longueur de la canalisation.
La manoeuvre de l'enveloppe mobile 2 pour obtenir le déplacement relatif entre les deux enveloppes est réalisée au moyen de deux deuxièmes galets 22,23 respectivement présentant deux axes perpendiculaires 24,25 prévus sur le côté du rail télescopique 21. L'ensemble est maintenu à la longueur souhaitée par le dispositif de bridage unique à boulons 27 (fig.3).
On notera la présence aux deux extrémités du dispositif de raccordement, des dispositifs de bridage 26 destinés à améliorer la tenue mécanique des barres et permettant à la manière de poignées, de réaliser le réglage en longueur du dispositif.

On a donc réalisé selon l'invention, un dispositif de raccordement permettant le réglage de la longueur de la canalisation via des lumières sur les barres et des enveloppes télescopiques.
Ce dispositif permet à partir d'une longueur nominale, de réaliser un réglage de la longueur de la connexion chez le client par l'installateur.
Il est ainsi possible d'ajuster sur le chantier la longueur d'un élément de canalisation préfabriqué droit sans perte des performances IP et de court circuit.

On obtient une diminution du temps de mise en oeuvre par le fait qu'il n'est pas nécessaire de réaliser des commandes spéciales dites de fin de chantier. Il est ainsi aisé d'obtenir une flexibilité de réglage d'un élément droit allant de 1100 à1500 millimètres. Le réglage de l'élément s'effectue sans outil spécial.

Bien entendu, l'invention n'est pas limitée aux modes de réalisations décrits et illustrés qui n'ont été donnés qu'à titre d'exemple. Au contraire, l'invention comprend tous les équivalents techniques des moyens décrits, conformes aux revendications.

## Revendications

1. Dispositif de raccordement électrique de deux tronçons d'une canalisation électrique préfabriquée, ladite canalisation électrique comportant un certain nombre de barres conductrices s'étendant sensiblement parallèlement les unes par rapport aux autres, comportant un premier ensemble (A) d'au moins une portion de barres (6,7,8,9), et un second ensemble (B) d'au moins une portions de barre (10,11,12,13), lesdites portions de barres du premier ensemble recouvrant au moins en partie respectivement les portions de barres du second ensemble, lesdites portions de barres du premier ensemble de barres étant en contact électrique respectivement avec les portions de barre du second ensemble sur une zone de contact, les deux ensembles de portions de barres (A,B) pouvant être déplacés l'un par rapport à l'autre de manière à faire varier la longueur de recouvrement des portions de barres et ainsi la longueur du dispositif de raccordement, et des moyens de maintien des deux ensembles (A,B) de portions de barres dans la position de réglage choisie, les barres (6,7,8,9) ou (10,11,12,13) de l'un des ensembles de portions de barres étant solidarisées à au moins une tige (15), et les barres (10,11,12,13) ou (6,7,8,9) de l'autre ensemble de portions de barre comportant chacune au moins une lumière (14) destinées à coopérer avec la au moins une tige précitée (15) pour permettre le déplacement relatif entre les portions de barres des premier et second ensembles de barres, **caractérisé en ce qu'**il comporte au moins un galet (20) dit premier place autour de la au moins une tige (15) au niveau de la jonction électrique entre deux portions de barres et destiné(s) à réduire le frottement entre les portions de barres et la tige (15).

2. Dispositif selon la revendication 1, **caractérisé en ce que** chaque ensemble de barres (A,B) est monté dans une enveloppe (1,2) à laquelle il est fixé, les dimensions des enveloppes (1,2) étant telles que l'une de enveloppes puisse coulisser par rapport à l'autre enveloppe lors du déplacement relatif des deux ensembles (A,B) de portions de barres, grâce à des moyens de coulissement et de centrage (16) prévus en partie sur l'une (1) des enveloppes et/ou en partie sur l'autre enveloppe (2).

3. Dispositif selon la revendication 2, **caractérisé en ce qu'**il comporte des moyens de réglage de la position relative des deux enveloppes (1,2), lesdits moyens comportant deux galets (22,23) dits seconds comportant respectivement deux axes (24,25) sensiblement perpendiculaires l'un par rapport à l'autre.

4. Dispositif selon l'une quelconque des revendications précédentes, **caractérisé en ce que** l'une ou les enveloppes (1,2) comporte(nt) des rails télescopiques (21) destinés à assurer le guidage et le centrage des barres.

5. Dispositif selon l'une quelconque des revendications 1 à 4, **caractérisé en ce qu'**il comporte des blocs isolants (19) placés entre deux barres en regard non destinées à être reliées électriquement.

6. Dispositif selon l'une quelconque des revendications précédentes, **caractérisé en ce qu'**il comporte au moins un dispositif de bridage (17) des portions de barres mobiles(6 à 9) et/ou au moins un dispositif de bridage (18,27) des portions de barres fixes (10 à 13).

7. Dispositif selon l'une quelconque des revendications précédentes, **caractérisé en ce que** la zone de contact entre les portions de barres est constante quelque soit la distance de recouvrement entre les portions de barres des deux ensembles précités et donc la position de réglage choisie.

8. Dispositif selon la revendication 6, **caractérisé en ce que** le(s) dispositif(s) de bridage fixe(s) (18,27) des portions de barres fixes (10 à 13) comporte(nt) des tiges isolées (28,15) coopérant avec les lumières précitées (14).

## Claims

1. Device for electrical connection of two sections of a pre-fabricated electrical canalization, said electrical canalization comprising a certain number of conducting bars extending substantially parallel to one another, comprising a first set (A) of at least one portion of bars (6,7,8,9), and a second set (B) of at least one portion of bars (10,11,12,13), said portions of bars of the first set at least partially overlapping respectively the portions of bars of the second set, said portions of bars of the first set of bars being in electrical contact respectively with the portions of bars of the second set of bars over a contact zone, the two sets of portions of bars (A,B) being able to be moved with respect to one another in such a way as to modify the overlap length of the portions of bars and thereby the length of the connection device, and means for securing the two sets (A,B) of portions of bars in the selected adjustment position, the bars (6,7,8,9) or (10,11,12,13) of one of the sets of portions of bars being secured to at least one rod (15), and the bars (10,11,12,13) or (6,7,8,9) of the other set of portions of bars each comprising at least one aperture (14) designed to operate in conjunction with the above-mentioned at least one rod (15) to enable relative movement between the portions of bars of the first and second sets of bars, **characterized in that** it comprises at least one roller (20) called first roller placed around the at least one rod (15) at the level of the electrical junction between two portions of bars and designed to reduce the friction between the portions of bars and the rod (15).

2. Device according to claim 1, **characterized in that** each set of bars (A,B) is fitted in an enclosure (1,2) whereto it is fixed, the dimensions of the enclosures (1,2) being such that, when relative movement of the two sets (A,B) of portions of bars takes place, one of the enclosures can slide with respect to the other enclosure by means of sliding and centring means (16) provided partly on one (1) of the enclosures and/or partly on the other enclosure (2).

3. Device according to claim 2, **characterized in that** it comprises means for adjusting the relative position of the two enclosures (1,2), said means comprising two rollers (22,23) called second rollers respectively comprising two spindles (24,25) substantially perpendicular with respect to one another.

4. Device according to any one of the foregoing claims, **characterized in that** one or both of the enclosures (1,2) comprise(s) telescopic rails (21) designed to perform guiding and centring of the bars.

5. Device according to any one of claims 1 to 4, **characterized in that** it comprises insulating blocks (19) placed between two facing bars not designed to be electrically connected.

6. Device according to any one of the foregoing claims, **characterized in that** it comprises at least one clamping device (17) for clamping the portions of movable bars (6 to 9) and/or at least one clamping device (18,27) for clamping the portions of fixed bars (10 to 13).

7. Device according to any one of the foregoing claims, **characterized in that** the contact zone between the portions of bars is constant whatever the overlap distance between the portions of bars of the above-mentioned two sets and therefore the selected adjustment position.

8. Device according to claim 6, **characterized in that** the fixed clamping device(s) (18,27) of the portions of fixed bars (10 to 13) comprise(s) insulated rods (28,15) operating in conjunction with the above-mentioned apertures (14).

## Patentansprüche

1. Elektrische Anschlussvorrichtung zur Verbindung von zwei Abschnitten eines fabrikfertigen Schienenverteilersystems mit einer bestimmten Anzahl von annähernd parallel zueinander angeordneten Stromschienen, welche Anschlussvorrichtung eine erste Anordnung (A) mit mindestens einem Stromschienenabschnitt (6, 7, 8, 9) und eine zweite Anordnung mit (B) mit mindestens einem Stromschienenabschnitt (10, 11, 12, 13), wobei die genannten Stromschienenabschnitte der ersten Anordnung die Stromschienenabschnitte der zweiten Anordnung zumindest teilweise überlappen, die genannten Stromschienenabschnitte der ersten Anordnung im Bereich einer Kontaktzone elektrisch mit den Stromschienenabschnitten der zweiten Anordnung verbunden sind, die beiden Anordnungen (A, B) der Stromschienenabschnitte gegeneinander verschoben werden können, um die Länge des Überlappungsbereichs der Stromschienenabschnitte und damit die Länge der Anschlussvorrichtung zu verändern, sowie Feststellmittel zum Feststellen der beiden Anordnungen (A, B) mit den Stromschienenabschnitten in der gewählten Stellung umfasst, wobei die Stromschienen (6, 7, 8, 9) bzw. (10, 11, 12, 13) einer der beiden, die Stromschienenabschnitte enthaltenden Anordnungen mit mindestens eine Stange (15) verbunden sind und in jeder der Stromschienen (10, 11, 12, 13) bzw. (6, 7, 8, 9) der anderen, sie Stromschienenabschnitte enthaltenden Anordnung mindestens ein Schlitz (14) ausgebildet ist, der dazu dient, mit der genannten, mindestens einfach vorhandenen Stange (15) zusammenzuwirken, um die relative Verschiebung der Stromschienenabschnitte der ersten und der zweiten Stromschienenanordnung zueinander zu ermöglichen, **dadurch gekennzeichnet, dass** die Vorrichtung mindestens eine, als erste Rolle bezeichnete Rolle (20) umfasst, die in Höhe der Kontaktzone der beiden Stromschienenabschnitte auf der mindestens einfach vorhandenen Stange (15) gelagert ist und dazu dient, die Reibung zwischen den Stromschienenabschnitten und der Stange (15) zu verringern.

2. Vorrichtung nach Anspruch 1, **dadurch gekennzeichnet, dass** jede Stromschienenanordnung (A, B) in einen Gehäusekasten (1, 2) montiert und an diesem befestigt ist, wobei die Abmessungen der Gehäusekästen (1, 2) so ausgebildet sind, dass bei der relativen Verschiebung der beiden Stromschienenanordnungen (A, B) zueinander einer der Gehäusekästen mithilfe von Gleit- und Zentriermitteln (16), die teilweise in einem der Gehäusekästen (1) und/oder teilweise im anderen Gehäusekasten (2) angeordnet sind, in Bezug zum anderen Gehäusekasten verschoben werden kann.

3. Vorrichtung nach Anspruch 2, **dadurch gekennzeichnet, dass** sie Einstellmittel zur Einstellung der relativen Stellung der beiden Gehäusekästen (1, 2) zueinander umfasst, welche Mittel zwei als zweite Rollen bezeichnete Rollen (22, 23) mit zwei annähernd senkrecht zueinander stehenden Achsen (24, 25) umfasst.

4. Vorrichtung nach irgendeinem der vorhergehenden Ansprüche, **dadurch gekennzeichnet, dass** einer der oder beide Gehäusekästen (1, 2) Teleskopschienen (21) zur Führung und Zentrierung der Stromschienen umfasst.

5. Vorrichtung nach irgendeinem der Ansprüche 1 bis 4, **dadurch gekennzeichnet, dass** sie Isolierstücke (19) umfasst, die jeweils zwischen je zwei einander gegenüberliegenden, nicht elektrisch miteinander zu verbindenden Stromschienen angeordnet sind.

6. Vorrichtung nach irgendeinem der vorhergehenden Ansprüche, **dadurch gekennzeichnet, dass** sie mindestens eine Spannvorrichtung (17) zum Zusammenziehen der beweglichen Stromschienenabschnitte (6 bis 9) und/oder mindestens eine Spannvorrichtung (18, 27) zum Zusammenziehen der feststehenden Stromschienenabschnitte (10 bis 13) umfasst.

7. Vorrichtung nach irgendeinem der vorhergehenden Ansprüche, **dadurch gekennzeichnet, dass** unabhängig vom Grad der Überlappung zwischen den Stromschienenabschnitten der beiden genannten Anordnungen und damit von der eingestellten Länge der Vorrichtung die Größe der Kontaktzone zwischen den Stromschienenabschnitten konstant ist.

8. Vorrichtung nach Anspruch 6, **dadurch gekennzeichnet, dass** die feststehende/-n Spannvorrichtung/-en (18, 27) der feststehenden Stromschienenabschnitte (10 bis 13) Isolierstangen (28, 15) umfasst/umfassen, die mit den genannten Schlitzen (14) zusammenwirken.
